# EUROPEAN PATENT APPLICATION

(11) **EP 1 657 939 A1**
(43) Date of publication of application: **17.05.2006**
(21) Application number: 05256464.8
(22) Date of filing: 18.10.2005
(51) Int. Cl.: H04Q 7/22, G06F 17/30

(54) **System and Method for facilitating distribution of information in a network**

(30) Priority: 16.11.2004 GB 0425261
(71) Applicant: Vodafone Group PLC, Newbury Berkshire RG14 2FN (GB)
(72) Inventor: Liotta, Antonio, London E15 1AU (GB); Ballette, Marco, Guildford Surrey GU2 7NW (GB); Lin, Ling, Guildford Surrey GU2 9GX (GB)
(74) Representative: Foster, Mark Charles

(57) **Abstract**

A network includes a group (34,36) of devices (30). The super peer nodes (32) receive requests for a service from a device (30) and provide the requesting device (30) with the address associated with the service for facilitating a peer-to-peer communication session between devices (30) whereby the service is provided to the requesting device (30). The super peer nodes (32) monitor their available capacity for storing advertisements and vary the number of super peer nodes (32) in the group in dependence upon the available capacity. A control node (38) stores data indicative of the services provided by the devices (30) and a respective address indicative of the device (30) providing the service.

## Description

The present invention relates to facilitating distribution of information in a network.

According to a first aspect of the present invention, there is provided a network having a group of devices, each device having an address for enabling messages to be delivered thereto in said group, wherein some of the devices provide services for use by the group and some of the devices use services provided by the group, the network including a plurality of nodes
- for storing advertisements for services provided by the devices and a respective address indicative of the device providing the service,
- for receiving a request for a service from a device,
- for providing the requesting device with the address associated with the service for facilitating a peer-to-peer communication session between devices whereby the service is provided to the requesting device,
wherein the plurality of nodes monitor their available capacity for storing advertisements and vary the number of nodes in the group in dependence upon the available capacity.

The devices that provide services for use by the group can be considered to perform a "server role", and the devices that use services provided by the group can be considered to perform a "client role". The client and server roles are interchangeable. One device may be a member of a plurality of groups. Such a device may perform a "server role" in one group and a "client role" in another group.

The "services" may be any information or process useful to a device or the user thereof. In the embodiment to be described the requested service is details of houses for sale in a particular area. The service provided is details of houses for sale by estate agents (or vendors) in that area. In the embodiment a group of devices all have a common interest in a particular service type.

The "devices" may be any type of communication or processing device. For example, some of the devices may comprise mobile or cellular telecommunication terminals. The "nodes" may also may be any type of communication or processing device. For example, some of the nodes may comprise mobile or cellular telecommunication terminals. In the embodiment to be described a simple peer is an example of a device and a super peer is an example of a node.

According to a second aspect of the invention, there is provided a network having a group of devices, each device having an address for enabling messages to be delivered thereto in said group, wherein some of the devices provide services for use by the group and some of the devices use services provided by the group, the network including a plurality of nodes.
- for storing advertisements for services provided by the devices and a respective address indicative of the device providing the service,
- for receiving a request for a service from a device,
- for providing the requesting device with the address associated with the service for facilitating a peer-to-peer communication session between devices whereby the service is provided to the requesting device,
wherein each node is operable to cause its stored advertisements for services provided by the devices and the respective addresses indicative of the devices providing the services to be also stored on another node, whereby to facilitate use of that service when the first-mentioned node is inoperable for communication within the network.

According to a third aspect of the invention, there is provided a network having a group of devices, each device having an address for enabling messages to be delivered thereto in said group, wherein some of the devices provide services for use by the group and some of the devices use services provided by the group, the network including a plurality of nodes.
- for storing advertisements for services provided by the devices and a respective address indicative of the device providing the service.
- for receiving a request for a service from a device,
- for providing the requesting device with the address associated with the service for facilitating a peer-to-peer communication session between devices whereby the service is provided to the requesting device,
wherein the network further includes a control node for storing data indicative of the advertisements relating to services provided by the devices and a respective address indicative of the node storing the advertisements, for receiving a request to provide a service or a request to use a service, for analysing the request and the stored data indicative of services provided by the devices, and for providing in response to the request the address indicative of the device providing a relevant service.

According tc a fourth aspect of the invention, there is provided a method of operating a network having a group of devices, each device having an address for enabling messages to be delivered into said group, wherein some of the devices provide services for use by the group and some of the devices use services provided by the group, and the network including a plurality of nodes
- for storing advertisements for services provided by the devices and a respective address indicative of the device providing the service,
- for receiving a request for a service from a device,
- for providing the requesting device with the address associated with the service for facilitating a peer-to-peer communication session between devices whereby the service is provided to the requesting device,
the method including operating the plurality of nodes to monitor their available capacity for storing advertisements and to vary the number of nodes in the group in dependence upon the available capacity.

Embodiments of the invention, will now be described by way of example with reference to the accompanying drawings, in which:-
Figure 1 shows schematically a network in accordance with the invention;
Figure 2 shows two groups within the network and a centralised server for administering the groups;
Figure 3 shows the parsing of a service request from a device by the centralised server;
Figure 4 shows the data exchanges that occur when a device that is not yet a member of a group issues a search advertisement to the centralised server;
Figure 5 shows a device becoming a member of a group;
Figure 6 shows the group after the device of Figure 5 has joined the group;
Figure 7 shows the data exchanges that occur when a device that is not a member of a group issues a search advertisement to the centralised server;
Figure 8 and 9 show the data exchanges that occur when a device that is a member of a group issues a search advertisement to a particular super peer;
Figure 10 shows the procedure when a simple peer attempts to store an advertisement on a super peer with no spare capacity;
Figure 11 shows a first method of electing an additional super peer from existing simple peers;
Figure 12 shows a second method of electing an additional super peer from existing simple peers;
Figure 13 shows a super peer whose capacity is under-used;
Figure 14 shows a method of changing an under-used super peer to a simple peer; and
Figure 15 and 16 show the procedure to re-establishing a communication pipe between two peers when the IP address of one or both of the peers changes.

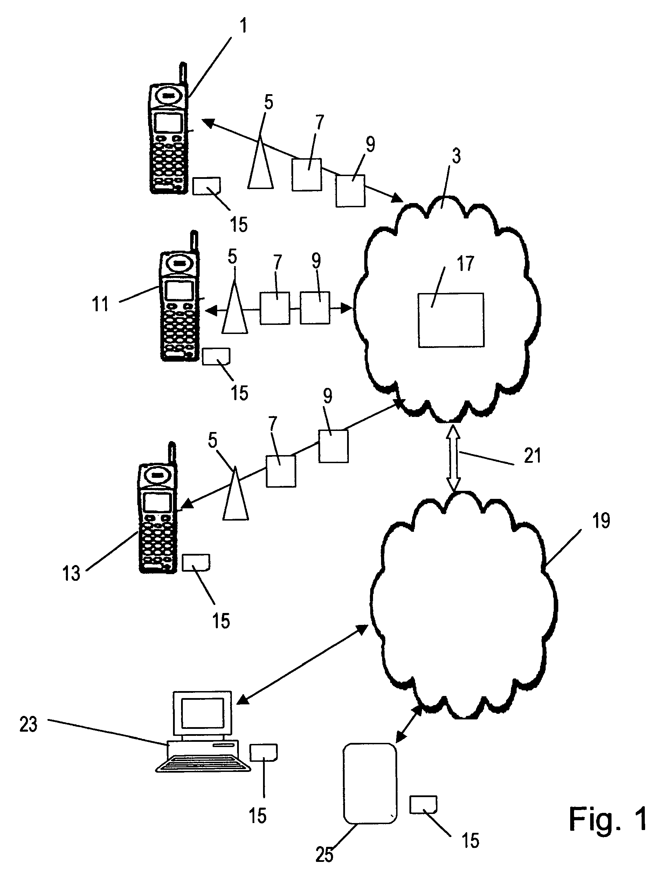

Figure 1 shows a cellular network. However, it should be appreciated that the invention is applicable to any type of network, although it is particularly (but not exclusively) applicable to a network where at least some of the devices communicate using mobile telecommunications/wireless data transmission. Mobile terminal 1 is registered with GSM/GPRS or UMTS (3G) mobile telecommunications network 3. The mobile terminal 1 may be a handheld mobile telephone, a personal digital assistant (PDA) or a laptop computer equipped with a datacard. The mobile terminal 1 communicates wirelessly with mobile telecommunications network 3 via the radio access network (RAN) of the mobile telecommunications network 3, comprising, in the case of a UMTS network, base station (Node B) 5, and radio network controller (RNC) 7. Communications between the mobile terminal 1 and the mobile telecommunications network 3 are routed from the radio access network via GPRS support nodes (SGSN) 9, which may be connected by a fixed (cable) link to the mobile telecommunications network 3.

In the conventional manner, a multiplicity of other mobile terminals are registered with the mobile telecommunications network 3. These mobile terminals include mobile terminals 11 and 13. The terminals 11 and 13 communicate with the mobile telecommunications network 3 in a similar manner to the terminal 1, that is via an appropriate Node B 5, RNC 7 and SGSN 9.

The mobile telecommunications network 3 includes a gateway GPRS support node (GGSN) 17 which enables IP-based communications with other networks, such as the Internet 19 via an appropriate link 21. A multiplicity of terminals are connected to the Internet (by fixed or wireless links), and a PC terminal 23 and a PDA terminal 25 are shown by way of example.

Each of the mobile terminals 1,11 and 13 is provided with a respective subscriber identity module (SIM) 15. During the manufacturing process of each SIM, authentication information is stored thereon under the control of the mobile telecommunications network 3. The mobile telecommunications network 3 itself stores details of each of the SIMs issued under its control. In operation of the mobile telecommunications network 3, a terminal 1, 11, 13 is authenticated (for example, when the user activates the terminal in the network with a view to making or receiving calls) by the network sending a challenge to the terminal 1,11,13 incorporating a SIM 15, in response to which the SIM 15 calculates a reply (dependent on the predetermined information held on the SIM - typically an authentication algorithm and a unique key Ki) and transmits it back to the mobile telecommunications network 3. The mobile telecommunications network 3 includes an authentication processor 17 which generates the challenge and which receives the reply from the terminal 1,11,13. Using information pre-stored concerning the content of the relevant SIM 15, the authentication processor calculates the expected value of the reply from the mobile terminal 1,11,13. If the reply received matches the expected calculated reply, the SIM 15 and the associated mobile terminal are considered to be authenticated.

It should be understood that such an authentication process can be performed for any terminal provided with a SIM 15 under control of the mobile telecommunications network 3. In the embodiment the terminal communicates wirelessly with the mobile telecommunications network 3 via the network's radio access network, although this is not essential. For example, the terminal may communicate with the network via the fixed telephone network (PSTN), via an "access point" (to be described below) and/or via the Internet. The PC 23 and the PDA 25 may also be provided with a SIM 15 under the control of the network.

The SIM 15 used by the terminal 1,11,13,23,25 may be a SIM of the type defined in the GSM or UMTS standards specifications, or may be a simulation of a SIM - that is, software or hardware that performs a function corresponding to that of the SIM. The SIM may be in accordance with the arrangement described in WO-A-2004 036513.

It should be noted that the authentication process being described does not necessarily authenticate the human identity of the user. For example, mobile telecommunication networks have pre-pay subscribers who are issued with SIMs in return for pre-payment, enabling them to use network services. However, the identity of such pre-pay subscribers may not be known by the network. Nevertheless, such a user cannot make use of the network until the network has authenticated the user's SIM - that is, has confirmed that such user is a particular user who has a particular pre-paid account with a network.

The network shown in Figure 1 comprises both the mobile telecommunications network 3 and the Internet 19 (which itself comprises a multiplicity of other networks).

Conventionally, a mobile terminal that is registered with a GPRS or UMTS mobile telecommunications network is allocated an IP address which does not change (that is, each time the mobile terminal is activated within the network the same IP address is used to route communications to or from that mobile terminal). However, there have recently been proposals to allow access to the features and services provided by mobile telecommunications networks other than by accessing those networks in the conventional manner by wireless signalling between the mobile terminal and the radio access network providing coverage in the cell occupied by the mobile terminal using GSM/UMTS communication protocols. It has been proposed to provide network access points, for example, at a subscriber's home. A modified GSM/UMTS terminal is provided with the facility to additionally communicate with the access point by any suitable technology, for example, by a Bluetooth (RTM) connection or other WLAN link.

The access point performs a role corresponding to that of the base station 5. An access controller is provided which performs a function analogous to that of a RNC 7. Communication between the access point and the access controller is IP-based. The access controller converts IP-based signalling received from the access point to use protocols for signalling in conventional GSM/UMTS networks between the RNC 7 and the SGSN 9.

Each time a mobile terminal connects to an access point, it will be provided with an IP address for use during that particular communication session. Therefore, when a mobile terminal forms IP-based communication via an access point rather than a conventional base station 5 and radio network controller 7, it will receive a different IP address each time it connects to any access point.

The present invention in one aspect concerns the facilitation of distribution of information in a network, and in particular seeks to enable efficient peer-to-peer communication between terminals. The mechanism by which these terminals are connected to one another is not of particular relevance to the present invention (although certain embodiments do provide particular advantages when some or all of the terminals are linked via a non-fixed link, such as a mobile or cellular telecommunications network). The type of connection between the terminals is not specified in the following discussion for the sake of simplicity. The "network" connecting the terminals may of course comprise a multiplicity of different networks including mobile telecommunications networks, the Internet etc.

Particular difficulties with combining wireless terminals in a network that allows peer-to-peer communication between terminals include:
1. Connectivity of the wireless terminal may be lost (for example, because it moves out of the area of coverage of its cellular network).
2. "Handover": The access point and/or access network of the terminal may change, resulting in the IP address of the terminal charging.
3. Generally, mobile terminals have limited resources such as memory, CPU speed and battery power. These resources need to be used efficiently.
4. The available bandwidth for data communication is to be smaller than available in fixed networks.

JXTA is a set of open, generalized peer-to-peer protocols that allow any connected device on a network, such as cellular phones, PDAs, laptops and computers, to communicate and collaborate as peers. The JXTA V2.0 Protocols Specification is available form the following website: http://www.jxta.org. The basic terminology of JXTA is as follows:
**Peers:** any networked devices that implement the JXTA core protocols. Each peer is identified by a unique ID. Peers are autonomous and operate independently and asynchronously of all other peers, although some peers may depend on other peers as relays.
**Pipes:** Virtual communication channels used to send and receive messages between services or applications residing on peers. Pipes provide the illusion of virtual in and out connection that is independent of any single peer location network topology.
**Peer Groups:** collections of peers having a common set of interests. Each peer group is uniquely identified by a peer group ID. There are two main common motivations for creating peer groups. First, peer group boundaries permit only member peers to access and publish protected content and access peer group resources to create a secure environment. Second, Peer group boundaries define the search scope when searching for a group's resources, speeding up the discovery process and making it bandwidth efficient.
**Advertisements:** language-neutral metadata structures which describe all network resources, such as peers, peer groups, pipes and services.

There are various possible types of peer in JXTA. Peers can take on one or more roles, with the role type defining the set of responsibilities of the peers to the JXTA network:
**Simple peers:** can send and receive messages. They do not cache advertisements; the only information stored may be the location (IP address) of their super peers (discussed immediately below).
**Super peers:** can send and receive messages, and maintain a cache of advertisements. Furthermore, super peers can also forward discovery requests to help other peers discover resources. Each super peer maintains a list of other known super peers and also the peers that are using it as a super peer.

At the highest abstraction level, the JXTA architecture is divided into three layers:
1. **The JXTA core layer:** includes a set of various protocols specifically designed for peer-to-peer networks. The JXTA core runs on any reliable transfer protocol, such as TCP and HTTP. These protocols are know to those skilled in the art and will not be discussed further here.
2. **The middle layer includes:** JXTA services which encapsulate JXTA core implementation details to provide unique Application Programming Interfaces (API). JXTA services can be divided into two categories:
   Peer Service: functionality offered by a particular peer on the network to other peers. The capabilities of this service are unique to the peer and are available only when the peer is connected to the network.
   Peer Group Service: functionality offered by a peer group to the other members of the peer group. The core group services include: discovery service, membership service, access service, resolver service and monitor service.
3. **The top layer:** hosts the user application which builds on the capabilities of the service layer to provide peer-to-peer applications, such as peer-to-peer instant messaging, resource sharing and distributed computing applications.

The embodiment of the present invention seeks to provide an improvement to existing peer-to-peer protocols, that are not currently targeted for a mobile or cellular environment, which may have particular advantages when some of the devices connected to the network are mobile telecommunications devices. In the embodiment to be described, the terminology used to describe elements of the network is based on the JXTA terminology given above, although the elements may function differently in particular respects, as will be described.

There are two principal types of "Advertisement" in the embodiment:
1. "Published advertisement" - this is data describing a service or other information that a peer has or wishes to make available to other peers.
2. "Search advertisement" - this is data identifying information that the peer issuing the search advertisement wishes to receive.

A first limitation of the known JXTA-based system concerns the obtaining of published advertisements by issuance of a search advertisement. In the known arrangement the peer issuing the search advertisement must know the object name of the published advertisement that it is seeking. In order to locate the published advertisement there are three discovery techniques:
1. The peer can search the published advertisements stored in its own cache.
2. The peer can search advertisements stored in other peers that are in the same LAN by broadcast or multicast.
3. If the published advertisement is not available by technique 1 or 2 above, then the peer (if it is not a super peer) will pass the search advertisement to a super peer, which will in turn pass the search advertisement to other super peers of which it has details. These other super peers will be located in a different LAN. These other super peers will also propagate the request to further super peers of which they have details. This technique is referred to as WAN discovery. Such an approach may require the search advertisement to be propagated through a multiplicity of super peers in a multiplicity of LANs to obtain the desired published advertisement. It is also possible that the peer which does have the requested published advertisement is not known to any of the super peers through which the search advertisement is propagated, and therefore the published advertisement will never be retrieved from that peer.

A second problem with the known JXTA system is that there is no mechanism for managing the number of super peers relative to the number of simple peers. As will be explained below, this can be wasteful of resources, can adversely impact the scalability of the system and can result in service not being available due to a lack of the required number of super peers.

A third problem with the known JXTA system is that typically a published advertisement will only be available from one peer. This may not be a significant problem when all the peers are connected together by a fixed network. However, if the peer on which the published advertisement is stored is a mobile or cellular device, it may become temporarily unavailable, which will mean that the relevant published advertisement cannot be retrieved.

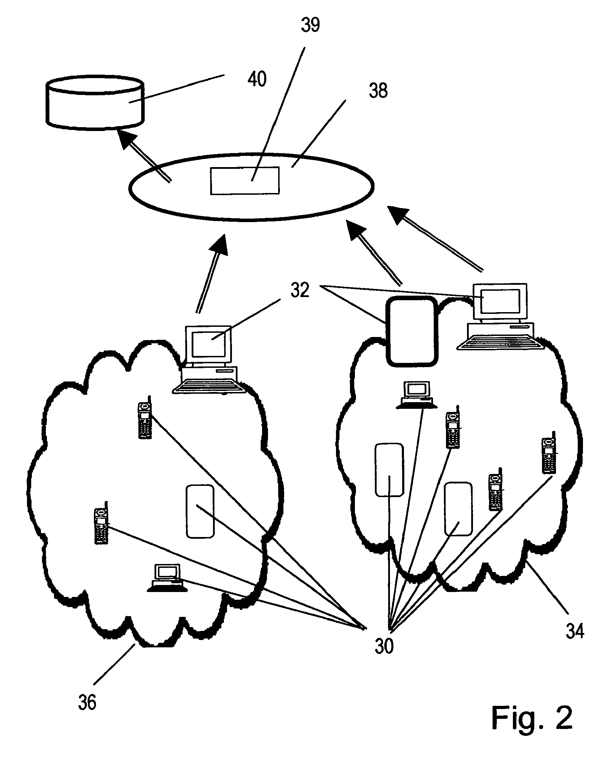

The system architecture of the embodiment of the present invention is shown in Figure 2. Peers (that is simple peers 30 and super peers 32) may be members of one or more groups 34,36. In accordance with an important feature of the embodiment, a centralised server 38 is provided for communicating with the peers 30,32 in each of the groups 34,36. The centralised server 38 may be located at any location in the network. For example, the centralised server 38 could be located in the mobile telecommunications network 3 (Figure 1). Some or all of the peers may be provided with a SIM or simulated SIM, enabling the peer to be authenticated by the mobile telecommunications network. The central server 38 may be configured to only communicate with peers that are so authenticated.

Each peer 30,32 has an IP address. It is possible that the IP address of a peer will change - for example, when the access point that it uses to connect the network changes.

The system supports web services. A web service is a software system designed to support inter-operable device-to-device interaction over a network. The web surface has an interface described in a machine-processable format called web service description language (WSDL). This is a standard XML (extensible Markup Language, www.xml.org)-formatted language. Other systems interact with the web service in a manner prescribed by its description using simple object access protocol (SOAP) messages, typically conveyed using HTTP with an XML serialisation in conjunction with other web-related standards. SOAP allows a program to invoke a service through message exchange, regardless of programming languages or underlying network.

The mechanics of the message exchange between devices are documented in a web service description (WSD). The WSD is a machine-processable specification of the web services interface, written in WSDL and stored in the central server in a WSDL directory 39. It defines the message formats, data types, transport protocols and transport serialisation formats that should be used between different devices. The service description represents an agreement governing the mechanics of the interaction between the devices.

The semantics of a web service is the shared expectation about the behaviour of the devices using the service, and in particular the nature of a response to a message sent to a device. The semantics of a web service can be considered to be an agreement between the devices concerning how and why they will interact. The semantic database 40 stores the semantics of the web service.

In the embodiment to be described, the semantic discovery mechanism helps in finding the group to be joined by a peer, based on user preferences and other requirements. First, the user interested in joining a certain group buying/selling houses in the embodiment contacts the centralized server 38 expressing their interest in joining that group, for example to sell or buy houses. The centralised server 38 processes this information and checks in its database for the existence house selling groups.

Groups having similar purposes are termed "Interest domains" - i.e. domains can be formed by different groups. For instance, the "house buying/selling" domain may be formed by different groups depending on the post code of the house. What characterises each different domain is the common XML schema used by the groups belonging to the same domain.

In general, a schema is an abstract representation of an object's characteristics and relationship to other objects. An XML schema represents the interrelationship between the attributes and elements of an XML object (for example, a document or a portion of a document). To create a schema for a document, the structure is analysed, defining each structural element.

Different domains have different schemas because they require information that varies with the domain. For instance, if the user is interested in joining a "Music file sharing" domain he will have to specify things such as the type of music in which he is interested, favourite singers, and so forth.

Elements in the schema are defined within a set of tags.

Once the user has expressed their domain preferences and the centralised server 38 has located the appropriate domain, the server 38 sends the schema to the user. The schemas relating to different domains are stored in the semantic database 40.

After receiving the domain-related schema the user can express their preferences regarding the group within a specific interest domain (e.g. House buying/selling domain).

A peer (hereinafter "Simple Peer 1") is the PC operated by an estate agent that has details of properties for sale in the GU2 post code area. Simple Peer 1 wishes to advertise details of the properties for sale so that these are available to other peers who might wish to buy the properties (i.e. it wishes to publish advertisements).

For example, Simple Peer 1 might include the following data:

**[Table 1]**

| SIMPLE PEER 1 | | |
|---|---|---|
| Current IP address: | 8.0.0.1:9701 | |
| Advertisements offered: (advertisements to be published) | Details of House I | GU2 6GX |
| | | £85,000 |
| | | Flat |
| | | 3 Bedrooms |
| | Details of House II | GU2 5KJ |
| | | £150,000 |
| | | Terraced |
| | | 2 Bedrooms |
| | Details of House III | GU2 6KJ |
| | | £550,000 |
| | | Detatched |
| | | 4 Bedrooms |

The advertisements of Simple Peer 1 to be published are expressed as a WSDL document according to a predefined WSDL schema. The schema is defined by the semantic database 40 and must reflect the predefined group hierarchy which is closely related to the application itself. In the example where the Simple Peer 1 wishes to join a group of entities buying or selling houses in a particular post code area, a possible hierarchy could be based on the first three letters of the post code, i.e. GU2 in this example..

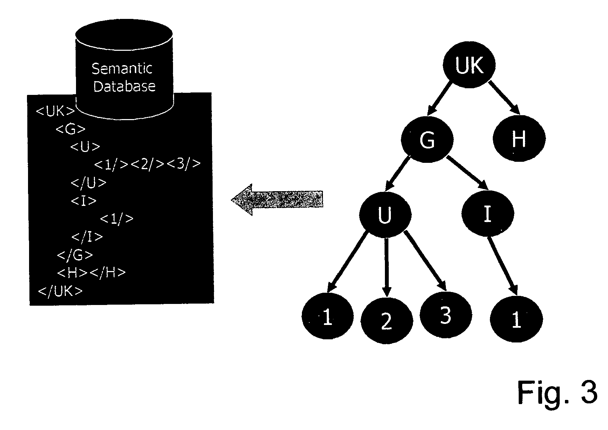

The advertisements are sent from Simple Peer 1 to the central server 38. The advertisements are then parsed by the central server 38 to determine whether there is an existing group to which the advertisements should be advertised or whether to define a new group (Figure 3).

In this example, it will be assumed that there are initially no other members of the group ("Group A"). The central server 38 will consequently return to Simple Peer 1 an instruction that the Simple Peer 1 should become a super peer (at least one super peer being required for any group). If Simple Peer 1 does not have sufficient resources to act as a super peer, the advertisement publication request will fail and no group will be formed. The Simple Peer 1 could attempt to become a member of a group interested in buying or selling houses in the GU2 post code area at a later time, when a peer capable of acting as a super peer is already a member of that group.

If the Simple Peer 1 is able to act as a super peer, the Simple Peer 1 becomes "Super Peer 1". In addition to storing its own IP address, a super peer also stores the IP address of any other super peers in the group (none at present) and details of any other simple peers in the group that have sent advertisements to Super Peer 1 (none at present).

For example, Super Peer 1 might include the following data:

**[ Table 2 ]**

| SUPER PEER 1 (P1) | | | |
|---|---|---|---|
| Current IP address | | 8.0.0.1:9703 | |
| Advertisements offered to Group A by Super Peer 1: (Published advertisments) | | Details of House I | GU2 6GX |
| | | | £85,000 |
| | | | Flat |
| | | | 3 Bedrooms |
| | | Details of House II | GU2 5KJ |
| | | | £150,000 |
| | | | Terraced |
| | | | 2 Bedrooms |
| | | Details of House III | GU2 6KJ |
| | | | £550,000 |
| | | | Detatched |
| | | | 4 Bedrooms |
| Details of other Super Peers in Group A | Current IP address | [ None ] | |
| | Details of advertisements offered to Group A: | [ None ] | |
| Details of other simple peers in Group A | Current IP address | [ None ] | |
| | Details of advertisements offered to Group A | [ None ] | |

Although Simple Peer 1/Super Peer 1 wishes to publish advertisements in this example, the Simple Peer 1/Super Peer 1 may additionally or alternatively issue search advertisements, seeking information from other peers in the group.

Now consider Simple Peer A, which is the mobile or cellular terminal of a user that wishes to buy a house in the GU2 area.

For example, Simple Peer A might include the following data:

**[ Table 3 ]**

| SIMPLE PEER A (P2) | | |
|---|---|---|
| Current IP address: | 8.0.0.2:9701 | |
| Advertisements offered to Group A: (published advertisement) | Details of House for sale | GU2 6GX |
| | | £85,000 |
| | | Flat |
| | | 3 Bedrooms |

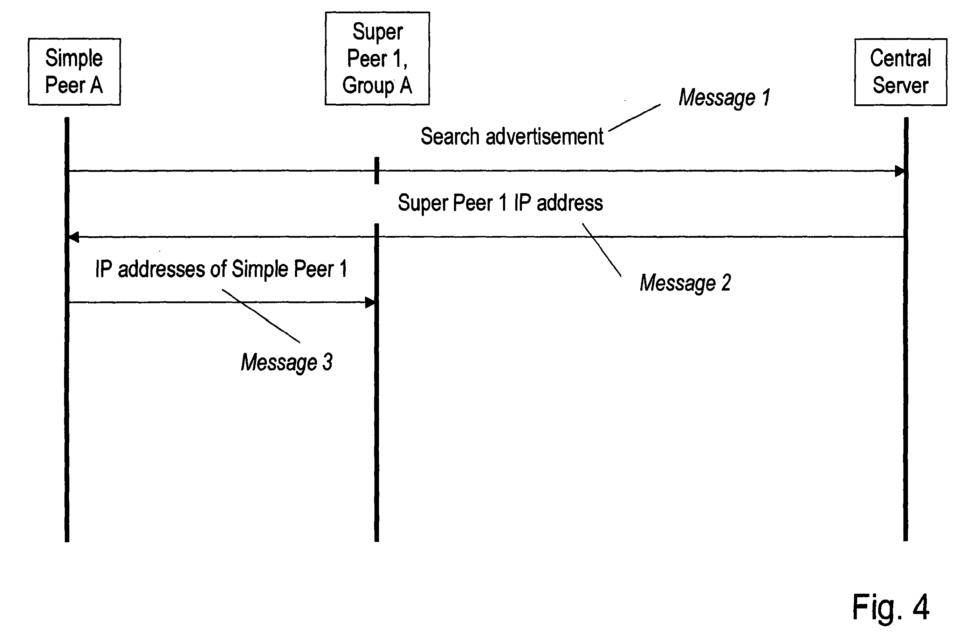

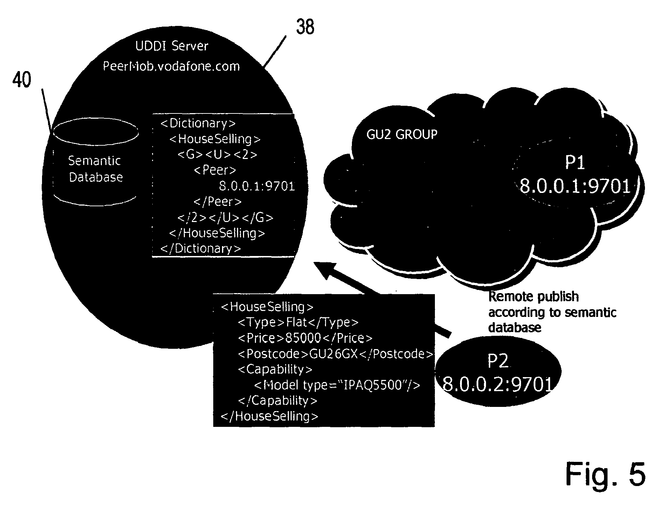

As shown in Figures 4 and 5, Simple Peer A ("P2") generates an advertisement in accordance with the relevant schema and sends this to the central server 38 (message 1). For example, within a schema relating to a document describing a "house buying/selling" domain advertisement, we need to define (see Figure 5):
- The type of the house (<Type>Flat</Type>);
- The price (<Price>£85000</Price>);
- The postcode (<Postcode>GU2 6GX</Postcode>);

At the central server 38 the resources advertisement in the form of a WSDL document according to the predefined WSDL schema defined by the semantic database 40 is parsed. It is then determined that Simple Peer A ("P2") is interested in advertising information concerning properties in the GU2 post code area and therefore that the peer should join group A. Accordingly, the central server 38 then returns to the Simple Peer A the IP address of Super Peer 1 ("P1") (message 2). Typically, of course, a group will have a plurality of super peers. Preferably, the IP address of two or more super peers should be returned to a simple peer issuing a search advertisement.

On receipt of the Super Peer 1 IP address, the Simple Peer A sends its IP address to the Super Peer 1, together with its advertisement (message 3).

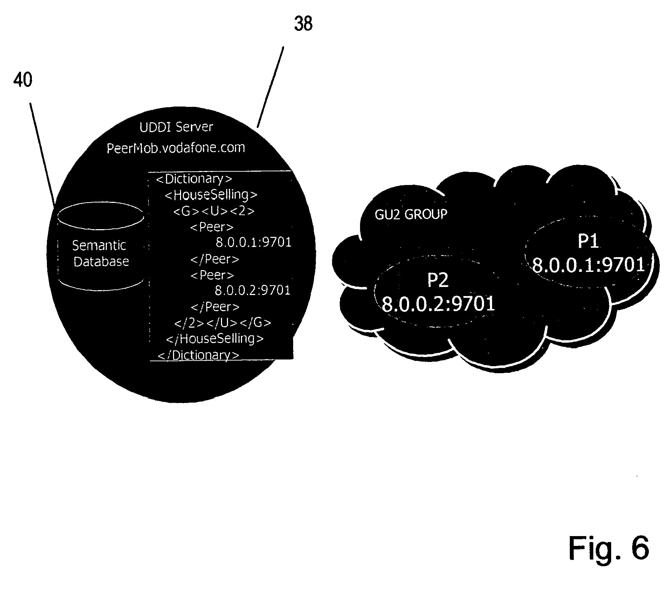

Simple Peer A then becomes a member of Group A (Figure 6). Simple Peer5 A's advertisement is "published" by Super Peer 1.

In accordance with a feature of this embodiment, the Simple Peer A periodically issues an availability or "keep alive" notification to the Super Peer 1 in order to confirm to the super peer that the Simple Peer A is still available. The Super Peer 1 monitors for receipt of the periodic availability notifications from the Simple Peer A and will delete the advertisement of Simple Peer A if the availability notification is not received for a predetermined time period (for example, because the peer is out of the mobile or cellular or radio coverage area or has been switched off).

Further simple peers and super peers may join the group in the manner described above. A mechanism for determining whether each peer will be a super peer or simple peer will be described later below.

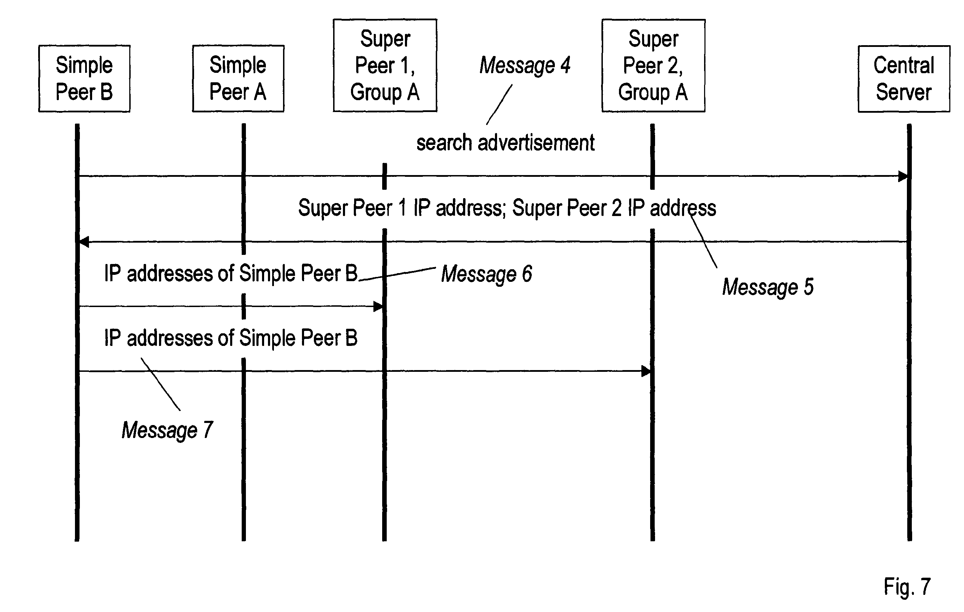

For the sake of simplicity, it will now be assumed that the group consists of Simple Peer A, Super Peer 1 and another super peer (Super Peer 2), which have joined the group by sending an advertisement to the central server 38 in the manner described above. Simple Peer B now wishes to join the group. If we also assume that Simple Peer B relates to a person wishing to buy a house for sale in the GU2 area, the mechanism by which Simple Peer B joins the group will now be described with reference to Figure 7.

The data relating to Simple Peer B may be as follows:-

**[Table 4]**

| SIMPLE PEER B | | |
|---|---|---|
| Current IP address: | 8.0.0.4:9702 | |
| advertisements offered to Group A: (search advertisements) | Details of House wanted | GU2 |
| | | £250,000 |
| | | Semi-detached |
| | | 3 Bedrooms |

As shown in Figure 7, Simple Peer B transmits its search advertisement, comprising details of the house wanted, to the central server 38 (message 4). The central server 38 determines that the Simple Peer B should join Group A. Central server 38 then returns to the Simple Peer B the IP address of the Super Peer 1 and the IP address of Super Peer (message 5). Simple Peer B then transmits its IP address together with its search advertisement to Super Peer 1 and Super Peer 2 (messages 6,7). As before, the Simple Peer B transmits periodically an availability notification to each of the super peers with which it is registered (Super Peer 1 and Super Peer 2), and the super peers monitor for receipt of the periodic availability notification. If the availability notification is not received for a predetermined period, the advertisements from the relevant simple peer are deleted from Super Peer 1 and Super Peer 2.

The data stored by Super Peer 1 (now that the group comprises Simple Peer A, Simple Peer B, Super Peer 1 and Super Peer 2) might be as follows:

**[Table 5]**

| SUPER PEER 1 (P1) | | | |
|---|---|---|---|
| Current IP address | | 8.0.0.1:9703 | |
| Advertisements offered to Group A by Super Peer 1: (Published advertisements) | | Details of House I | GU2 6GX |
| | | | £85,000 |
| | | | Flat |
| | | | 3 Bedrooms |
| | | Details of House II | GU2 5KJ |
| | | | £150,000 |
| | | | Terraced |
| | | | 2 Bedrooms |
| | | Details of House III | GU2 6KJ |
| | | | £550,000 |
| | | | Detached |
| | | | 4 Bedrooms |
| Details of other Super Peers in Group | Current IP address | 8.0.0.3:9704 (Super Peer 2) | |
| | advertisements to | Details of House I | GU2 4EX |
| | Group A: (Published advertisement) | | £250,000 |
| | | | Semi-detached |
| | | | 3 Bedrooms |
| | | Details of House II | GU2 7KP |
| | | | £150,000 |
| | | | Terraced |
| | | | 2 Bedrooms |
| | | Details of House III | GU2 5XJ |
| | | | £550,000 |
| | | | Detached |
| | | | 4 Bedrooms |
| Details of other simple peers in Group | Current IP address | 8.0.0.2:9701 (Simple Peer A) | |
| | Time since last "keep alive" notification received | 500sec | |
| | Details of advertisements to Group A by Simple Peer A | Details of House for sale | |
| | | | |
| | | | |
| | Current IP address | 8.0.0.4:9702 (Simple Peer B) | |
| | Time since last "keep alive" notification received | 800sec | |
| | Details of advertisements to Group A by Simple Peer B | Details of House wanted | |
| | | | |
| | | | |

Of course, there may be a multiplicity of different groups, each of which relates to a particular subject, such as users interested in playing a particular computer game, users interested in dating etc. The central server 38 maintains a database of the subjects to which each of the groups relate and of the super peers in each group. When a peer wishes to publish an advertisement (to offer services) or to issue a search advertisement (to obtain services), and that simple peer is not already a member of an appropriate group for that subject, the simple peer sends that advertisement to the central server 38.

The data stored on the central server 38 may be as follows:

**[Table 6]**

| CENTRAL SERVER | |
|---|---|
| Current IP address | |
| Semantic database | |
| WSDL dictionary | |
| Group A subject | Semantic searchable data |
| Details of Super Peer 1: | Current IP address |
| | Time since last "keep alive" notification received |
| Details of Super Peer 2: | Current IP address |
| | Time since last "keep alive" notification received |
| | |
| Group B subject | Semantic searchable data |
| Details of Super Peers | Current IP address |
| | Time since last "keep alive" notification received |

As described above, if an appropriate group exists, the IP address of one or more super peers serving that group is returned to a simple peer wishing to publish an advertisement or issue an advertisement. The simple peer then contacts each of the super peers directly and supplies to them its advertisement for publication or its search advertisement, together with the simple peer's IP address. By maintaining this searchable database in the central server 38, any peer can obtain from a known location (the central server 38) details of how to contact a peer in an appropriate group which has or requires relevant resources.

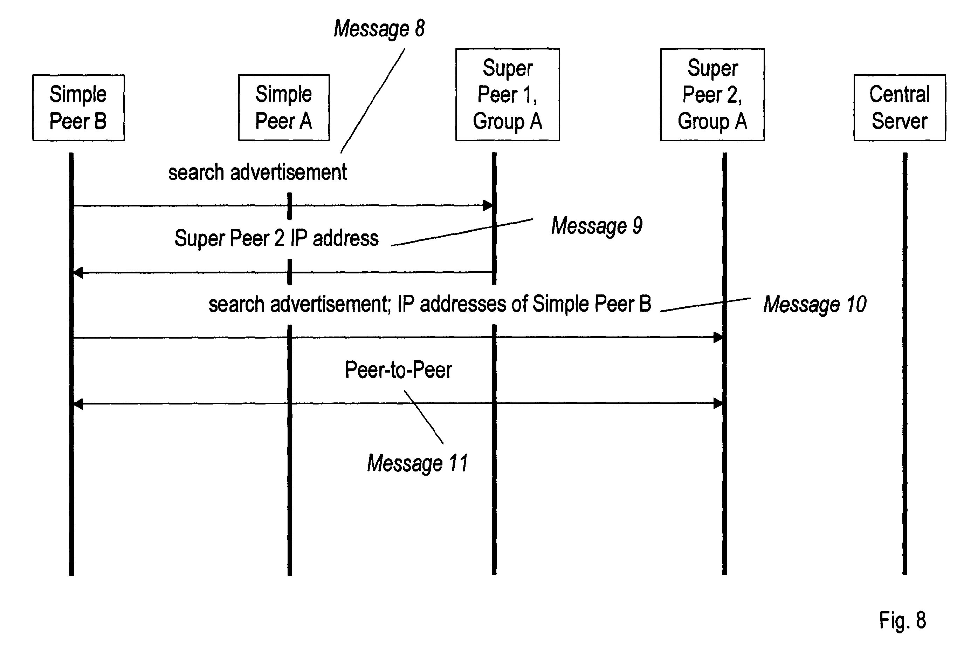

For example, referring to Figure 8, when Super Peer 1 receives the search advertisement from the Simple Peer B (message 8) the super peer will search its cache of advertisements as shown in Table 5, which cache includes advertisements available from Super Peer 1 itself, from Super Peer 2, Simple Peer A and Simple Peer B stored on Super Peer 1. If a matching advertisement is found (in this example, from Super Peer 2), the IP address of the relevant peer (Super Peer 2) is returned to Simple Peer B (message 9). Simple Peer B may then use the IP address received to initiate (message 10) a peer-to-peer communication session (messages 11) with Super Peer 2.

The peer-to-peer communication may be by means of a direct link between the Simple Peer B and the Super Peer 2 (that is, the communications are not routed via an intermediary). The peer-to-peer communication could be performed via the radio access network of a mobile telecommunications network - for example a GPRS/UMTS communication session, Session Initiation Protocol (SIP) communication session or voice call, or by another wireless link such as WLAN or Bluetooth (or by a fixed link). The Simple Peer B may contact the Super Peer 2 to retrieve an advertisement by downloading data in a predetermined form. This is an asynchronous communication session, and does not require any particular action by the Super Peer 2. The downloading of the information may be performed without the specific approval of the Super Peer 2.

If a SIP session is established between the peers, communication between these peers can be carried out using a variety of different protocols (for example, those designed for streaming audio and video, to provide a commentary on and description of the property for sale). These protocols are defined in the SIP session initiation messages. At the beginning of a SIP communication session, and prior to transmission of image or audio data, the Super Peer 2 may obtain from the Simple Peer B media reproduction quality criteria indicative of the ability of the Simple Peer B to display received images and reproduce received audio data. In response to the received media reproduction quality criteria the Super Peer 2 may modify (if required) the image/audio data prior to sending the image/audio data to the Simple Peer B. In this manner, the audio/image data sent to the Simple Peer B is adjusted and optimised for the capability of the receiving peer device. This will allow the best quality image/audio to be reproduced on the receiving device and/or will prevent waste of network resources (for example, by not transmitting image data which cannot be displayed by the receiving device). Such an arrangement is described in more detail in the Applicant's co-pending United Kingdom patent publication No. GB-A-2405768 ("Press to See", P40053GB), the content of which is hereby fully incorporated by reference.

If the user of Simple Peer B wishes to initiate an interactive or "live" communication session with the Super Peer 2, in a relatively simple form, that communication session could be a conventional voice call between the peers in which the users of the devices discuss details of the property for sale and perhaps arrange an appointment to view the property. Such a voice call could be a conventional circuit switched voice call routed via a mobile telecommunications network. However, an interactive SIP session could be initiated between the peers comprising perhaps an initial exchange of speech data between the users of the peers, and during which session the user of the Simple Peer B requests the user of Super Peer 2 to send particular images to the Simple Peer B device. These images may be captured during the session by a device linked to the Super Peer 2 and transmitted during the session. In this way the potential buyer can guide the potential seller to use their image capture device (such as mobile telephone digital camera) to give a personal, real-time video viewing of the relevant property. The availability of the Super Peer 2 to perform such an interactive communication session may be indicated by a "presence" indicator in the known manner.

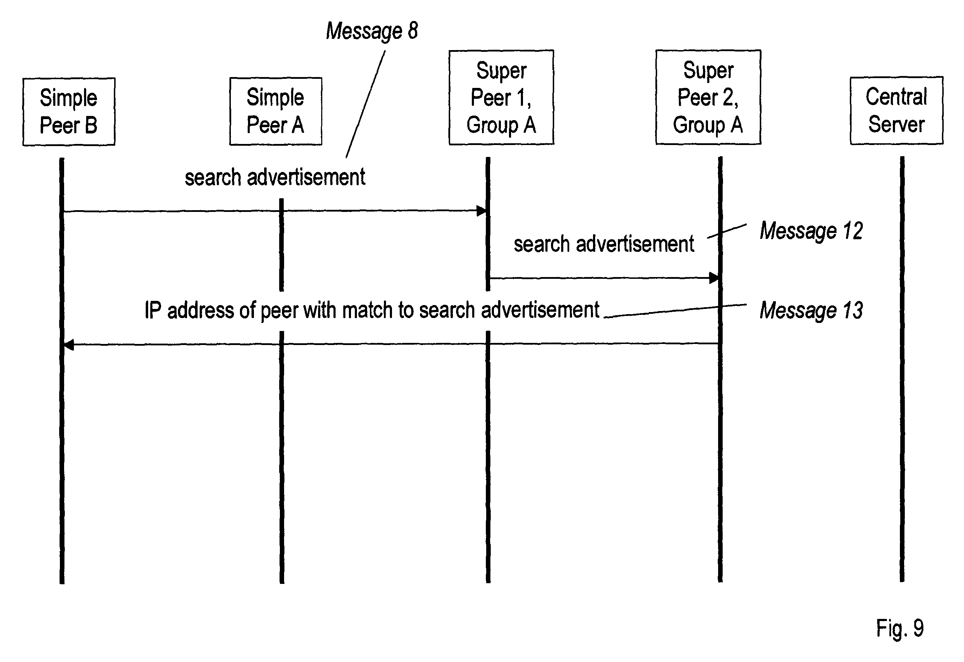

Figure 9 shows the procedure if the Super Peer 1 is unable to find a match to the advertisement in its cache. This would occur if Super Peer 1 hade not cached the advertisement published by Super Peer 2. The Super Peer 1 forwards the advertisement to all the other super peers (message 12) in the group of which it has details (Super Peer 2 in this example). Each of the receiving super peers will, in turn, search their local cache of advertisements. If a match is found, the IP address of the relevant peer is returned to Simple Peer A (message 13). A peer-to-peer communication session can then be started.

However, if a match is not found, that Super Peer then forwards the advertisement to all the other super peers (not shown) of which it has details. Each of the other the super peers that receive the advertisements in this way will search its cache of advertisements (including its own advertisements and those from other simple peers and super peers that have been sent to it). Each of those super peers which finds a match will return to the simple peer B the IP address of the relevant peer from which the cached advertisement was received. A peer-to-peer communication session between Simple Peer B and the relevant other peer can then be initiated.

Each super peer periodically issues an availability notification to the central server 38. On receipt of this notification, the central server 38 issues to that super peer the IP addresses of one or more other super peers (or the IP address of all the other Super Peers) in the group from which the central server has received an availability notification. In this way, the super peers maintain the IP addresses of available corresponding super peers in the group. As shown in table 6, the central server 38 monitors for receipt of these availability notifications. The IP addresses of super peers that have not issued a recent availability notification are deleted from the super peers due to non-receipt of their IP address from the central server 38.

The transmission of and monitoring for receipt of availability notifications from simple peers and super peers provides a group which is dynamic in nature, the number of simple peers and super peers present in the group at any time may change depending on their availability. For the maximum efficiency of operation of the group, there will be an optimal number of simple peers relative to the number of super peers, depending upon the capabilities (CPU power, storage facilities etc. of each super peer).

In the embodiment, each super peer may have available to it the location (IP address) of all other super peers in the group by virtue of this information being stored in the centralised server 38. Each super peer can store only a predetermined number of advertisements. Different peers will have a predetermined maximum number of advertisements that can be stored, depending upon the peer's processing power, memory etc. Preferably, any peer operating as a super peer should be able to store a reasonable number (e.g. more than 10) of advertisements. Each additional super peer in a group generates additional traffic, and a group with a large number of super peers, each storing a relatively small number of published advertisements, will require a greater amount of traffic compared to a group with a smaller number of super peers, each storing a relatively large number of published advertisements. The additional traffic is caused by the communications between the centralised server 38 and the super peers to collect availability information in order to allow a list of active super peers to be maintained in the centralised server 38.

In the embodiment, the election of super peers is managed solely by the super peers themselves, with no involvement from other entities. When a new peer wishing to publish an advertisement joins a group it will be supplied with a list of one or more super peers from the centralised server 38 in the manner described above. As also mentioned above, if there are no active super peers, the centralised server returns a request for the new peer to become a super peer.

Assuming that one or more super peers does already exist, the new peer will transmit the advertisements that it wishes to publish, or its search advertisement, to the super peers of which it has been advised by the centralised server 38.

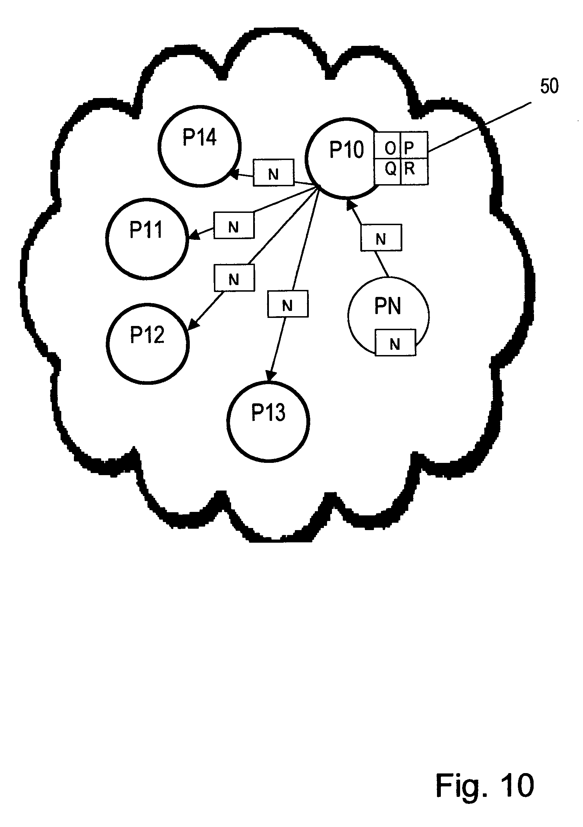

As shown in Figure 10, if a super peer P10 that receives such an advertisement from simple peer PN cannot store the advertisement in its cache 50 (because it has no spare capacity to store further advertisements), it will forward the request to the other super peers (P11,P12,P13,P14) in the group of which it has the IP address.

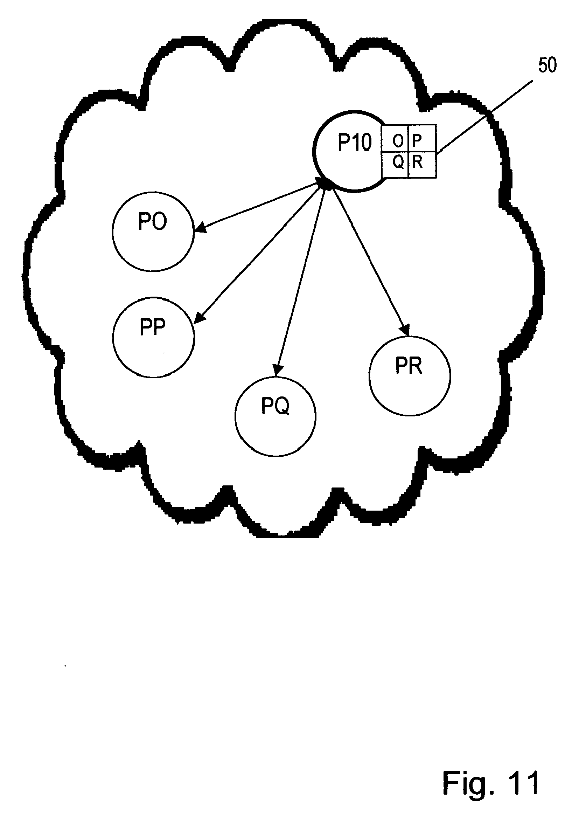

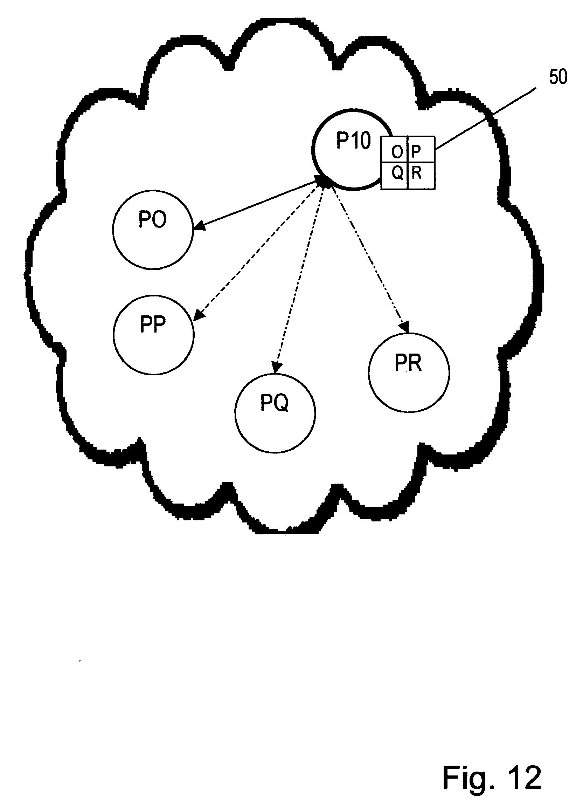

If no super peers in the group are able to store the advertisement they will respond with a rejection message. The super peer P10 then will initiate the election of a new super peer from the simple peers already present in the group. There are two possible approaches to this election of a new super peer:
1. As shown in Figure 11, the super peer P10 issues a request to each simple peer (PO,PP,PQ,PR) of which it has details to return information describing the type of device and its bandwidth capabilities in order to build a heuristic table and select the best candidate in dependence upon the received information.
2. As shown in Figure 12, the super peer selects a simple peer to be a super peer at random. The selected simple peer can accept or decline the request (for example, in dependence upon the device characteristics and bandwidth capabilities). If the selected simple peer declines the request, the super peer P10 will then issue a similar request to another simple peer. This process will continue until one simple peer does accept the request. If, however, no simple peers accept the request due to protocol stack, terminal and/or bandwidth limitations, the election process will fail and the incoming simple peer will not be able to join the group.

In the manner described above, a sufficient number of super peers should be able to be provided relative to the number of simple peers in order for communications within the group to be managed efficiently.

In addition to new peers joining the group, simple peers may leave the group, for example because they have found the information that they required, or the relevant device has simply been switched off (or leaves the radio coverage area if the device is a cellular or mobile telecommunications terminal). If a number of simple peers leave the group, the number of super peers relative to the number of simple peers may be too high, which will reduce the overall system performance.

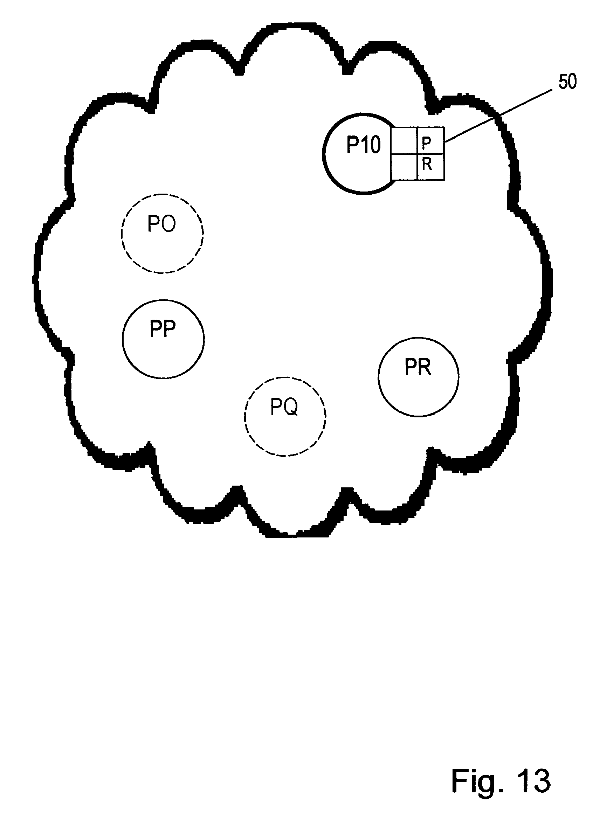

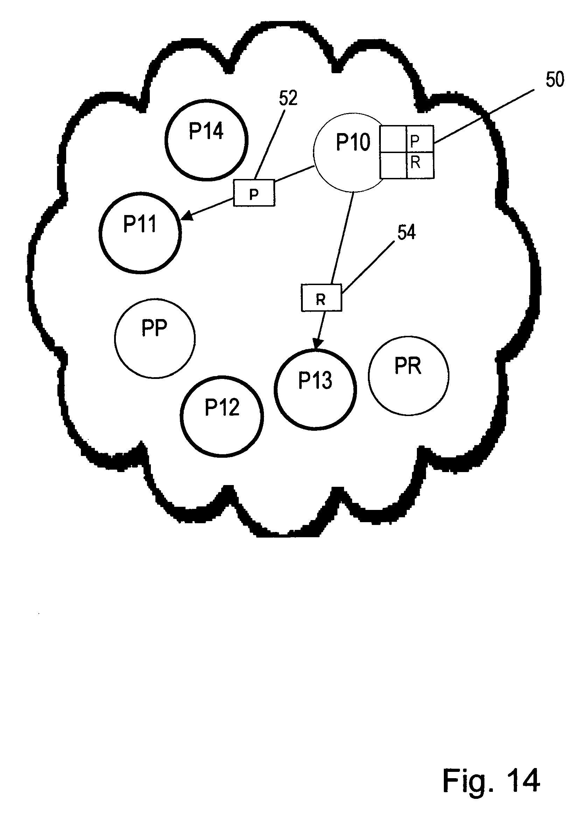

Each super peer may set a threshold at which point management action is triggered. For example, this threshold could be when less than or equal to 50% of that super peer's capacity to store advertisements is being used. In Figure 13, Simple Peers PO and PQ have left the group. Their advertisements have been deleted from the cache 50 of Super Peer P10. The non-usage threshold is then exceeded. When this threshold is exceeded, the Super Peer P10 will forward a request to the other super peers in the group to store its advertisements 52,54 (as shown in Figure 14). These advertisements can be distributed to one or more of the super peers P11,P13 in the group. These super peers may reply by accepting or rejecting the advertisements. If the super peers do have sufficient capacity between them to store all the advertisements present on the under-utilised super peer, that super peer P10 can then become a simple peer within the group after transmitting all its advertisements to the other super peers.

As mentioned above, in the group where one or more of the peers is a mobile or cellular telecommunications device, a mechanism is required in order to deal with "handover".

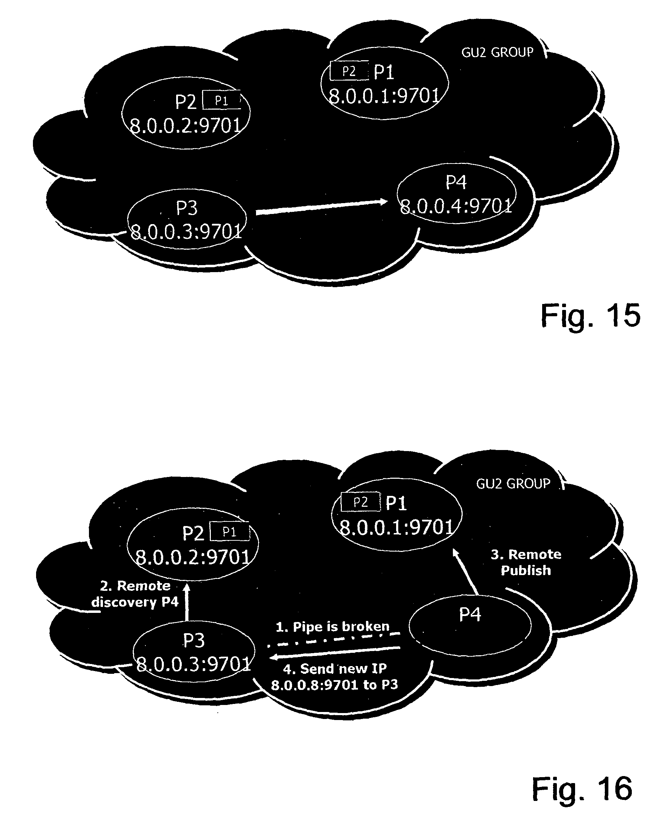

For example, as shown in Figures 15 and 16, if Simple Peer P3 is downloading data from Simple Peer P4, and Simple Peer P4 roams from one access point to another access point, the IP address of Simple Peer P4 will generally change (unless mobile IP is supported). Mobile terminals (such as UMTS and GPRS) have a fixed IP address. However, in a WLAN environment peers can switch from one access point to another and be assigned a different IP address. A peer may change its IP address in other situations too. For example, when the peer changes the access network technology used to connect to the Internet (for example from GPRS/UMTS to WLAN or vice versa) and the two networks are not integrated.

Due to the change in IP address, the pipe between the Simple Peer P3 and the Simple Peer P4 will therefore be broken. In the conventional JXTA system, the Simple Peer P4 would have to re-publish its new IP address to all the super peers of which it has details. Simple Peer P3 would also have to search for Simple Peer P4 by issuing a request to the super peers of which that simple peer is aware. Through propagation between the peers within the Group A, Simple Peer P3 will eventually obtain the IP address of Simple Peer P4. A pipe can then be established between the simple peers in order to begin transferring the files again. The time taken to establish this new pipe may be unacceptably long.

A peer may change its IP address in other situations too. For example, when the peer changes the access network technology used to connect to the Internet (for example from GPRS/UMTS to WLAN or vice versa) and the two networks are not integrated.

As discussed above, when the IP address changes, the communication link or pipe between the Simple Peer P3 and Simple Peer P4 is broken. In the embodiment, the breaking of the pipe triggers a new discovery procedure in order to reconnect Simple Peer P3 and Simple Peer P4. At the same time, Simple Peer P4 will re-publish its advertisements with its new IP address. In parallel, in order to speed up the reconnection process, Simple Peer P4 will automatically send its new IP address to Simple Peer P3.

This mechanism also works when both terminals change their IP address at the same time. In this case, when Simple Peer P3 detects that the pipe is broken, it will start looking for Simple Peer P4 by contacting the super peers (P2) of which it has the IP address. As described above, Simple Peer P4 will also contact the super peers (P1) of which it has the IP address and re-publish the service advertisement with the new IP address. At the same time Simple Peer P4 will try to contact Simple Peer P3 using the previous IP address of simple peer P3 in order to speed up the re-establishment of the communication link. Of course, in this instance, this will fail because the IP address of Simple Peer P3 has changed. In this case, the only way to re-establish a pipe is for Simple Peer P3 to search for Simple Peer P4 advertisement and for Simple Peer P4 to republish its own advertisement.

A similar approach may be followed when a super peer changes its IP address: the new IP address will be notified to the centralised server 38 and the other super peers within the group and to the simple peers whose advertisements that super peer stores in its cache. If two super peers change address simultaneously, the centralised server 38 will provide a back-up mechanism, allowing reconnection.

Although the above mechanism for re-establishing a pipe is efficient, it is advantageous to provide an arrangement where continuous or virtually continuous service availability is provided when some or all of the peers in a group are mobile or cellular devices (or may become temporarily unavailable for any reason). In accordance with the embodiment, the advertisements offered by each simple peer will be replicated in other peers in the same group. When a peer joins a group it will first publish its advertisement (on the or each super peer of which it has been provided the IP address). Other peers will be able to access the content of the advertisement, download and store it. In this way, there will be multiple copies of the same advertisement. Each peer which has downloaded the advertisement will generally be free to advertise that advertisement for other peers to download. However, Digital Rights Management (DRM) may be used to prevent free redistribution of some advertisements.

Re-publication of advertisements will naturally distribute multiple copies of advertisements in the group without the need for a resource management system. The more frequently requested advertisements will, by the nature of the system, be republished more often, and therefore will be available from a relatively large number of peers. The only distinction between the original advertisement and the re-published advertisements will be that interactive services between peers (such as video/voice calls, instant messaging etc.) will be available only from the original simple peer.

## Claims

1. A network having a group (34,36) of devices, each device having an address for enabling messages to be delivered thereto in said group (34,36), wherein some of the devices (30) provide services for use by the group (34,36) and some of the devices (30) use services provided by the group, the network including a plurality of nodes (32)
- for storing advertisements for services provided by the devices (30) and a respective address indicative of the device (30) providing the service,
- for receiving a request for a service from a device (30), and
- for providing the requesting device (30) with the address associated with the service (30) for facilitating a peer-to-peer communication session between devices (30) whereby the service is provided to the requesting device,
wherein the plurality of nodes (32) monitor their available capacity for storing advertisements and vary the number of nodes (32) in the group in dependence upon the available capacity.

2. The network of claim 1, including means for replicating on another device the data stored by one device for providing its service such that the service can also be provided by said other device.

3. The network of claim 1 or 2, including a control node for storing data indicative of the services provided by the devices and a respective address indicative of the device providing the service.

4. The network of claim 1,2 or 3, wherein the control node stores the service indicative data in a predetermined format interpretable by a service requesting device.

5. The network of claim 4, wherein the control node compiles a semantic database.

6. The network of any one of claims 1 to 5, wherein at least some of the devices communicate wirelessly in the group.

7. The network of claim 6, wherein at least some of the nodes communicate wirelessly in the group.

8. The network of claim 6 or 7, wherein at least some of the devices and/or nodes are GSM, GPRS, UMTS or WLAN communication devices.

9. The network of any one of claims 1 to 8, wherein at least one of said nodes includes means for determining when its available capacity for storing advertisements exceeds a threshold, and means for requesting another of said nodes to store an advertisement.

10. The network of claim 9, wherein the requesting means includes means for selecting another of said nodes.

11. The network of claim 10, wherein said selecting means is operable to interrogate a plurality of said nodes to determine data indicative of the ability of each of said nodes to store the advertisement.

12. The network of any one of claims 1 to 11, wherein at least one of said nodes includes means for determining when its available capacity for storing advertisements is below a threshold, and means for requesting another of said notes to store an advertisement.

13. The network of claim 12, wherein the requesting means is operable to remove the advertisements stored on the node when the advertisements have been stored on another node such that said device no longer functions as a node in the network.

14. A network having a group (34,36) of devices, each device having an address for enabling messages to be delivered thereto in said group, wherein some of the devices (30) provide services for use by the group (34,36) and some of the devices use services provided by the group (34,36), the network including a plurality of nodes (32).
- for storing advertisements for services provided by the devices and a respective address indicative of the device providing the service.
- for receiving a request for a service from a device,
- for providing the requesting device with the address associated with the service for facilitating a peer-to-peer communication session between devices whereby the service is provided to the requesting device,
wherein the network further includes a control node for storing data indicative of the advertisements relating to services provided by the devices and a respective address indicative of the node storing the advertisements, for receiving a request to provide a service or a request to use a service, for analysing the request and the stored data indicative of services provided by the devices, and for providing in response to the request the address indicative of the device providing a relevant service.

15. The network of claim 14, wherein the control node stores the service indicative data in a predetermined format interpretable by a service requesting device.

16. The network of claim 15, wherein the control node compiles a semantic database.

17. A network having a group of devices, each device having an address for enabling messages to be delivered thereto in said group, wherein some of the devices (30) provide services for use by the group (34,36) and some of the devices (30) use services provided by the group (34,36), the network including a plurality of nodes (32)
- for storing advertisements for services provided by the devices and a respective address indicative of the device providing the service,
- for receiving a request for a service from a device,
- for providing the requesting device with the address associated with the service for facilitating a peer-to-peer communication session between devices whereby the service is provided to the requesting device,
wherein each node (32) is operable to cause its stored advertisements for services provided by the devices (30) and the respective addresses indicative of the devices (30) providing the services to be also stored on another node (32), whereby to facilitate use of that service when the first-mentioned node is inoperable for communication within the network.

18. A method of operating a network having a group of devices, each device having an address for enabling messages to be delivered into said group, wherein some of the devices provide services for use by the group and some of the devices use services provided by the group, and the network including a plurality of nodes
- for storing advertisements for services provided by the devices and a respective address indicative of the device providing the service,
- for receiving a request for a service from a device,
- for providing the requesting device with the address associated with the service for facilitating a peer-to-peer communication session between devices whereby the service is provided to the requesting device,
the method including operating the plurality of nodes to monitor their available capacity for storing advertisements and to vary the number of nodes in the group in dependence upon the available capacity.

19. The method of claim 18, including replicating on another device the data stored by one device for providing its service such that the service can also be provided by said other device.

20. The method of claim 18 or 19, including providing a control node for storing data indicative of the services provided by the devices and a respective address indicative of the device providing the service.

21. The method of claim 18,19 or 20, wherein the control node stores the service indicative data in a predetermined format interpretable by a service requesting device.

22. The method of claim 21, wherein the control node compiles a semantic database.

23. The method of any one of claims 18 to 22, wherein at least some of the devices communicate wirelessly in the group.

24. The method of claim 23, wherein at least some of the nodes communicate wirelessly in the group.

25. The method of claim 23 or 24, wherein at least some of the devices and/or nodes are GSM, GPRS, UMTS or WLAN communication devices.
